# EUROPÄISCHE PATENTSCHRIFT

(11) **EP 3 128 220 B1**
(45) Veröffentlichungstag und Bekanntmachung des Hinweises auf die Patenterteilung: **05.07.2023**
(21) Anmeldenummer: 16170115.6
(22) Anmeldetag: 18.05.2016
(51) Int. Cl.: F16P 3/08, E05B 47/00

(54) **SICHERHEITSSYSTEM**
SAFETY SYSTEM
SYSTÈME DE SÉCURITÉ

(30) Priorität: 06.08.2015 DE 102015112991
(43) Veröffentlichungstag der Anmeldung: 08.02.2017
(73) Patentinhaber: EUCHNER GmbH + Co. KG, 70771 Leinfelden-Echterdingen (DE)
(72) Erfinder: Hörtling, Markus, 70771 Leinfelden-Echterdingen (DE); Kraus, Matthias, 73760 Ostfildern (DE); Schmid, Dominik, 72663 Großbettlingen (DE); Schmid, Monika, 72663 Großbettlingen (DE); Siefert, Timo, 70771 Leinfelden-Echterdingen (DE)
(74) Vertreter: Ruckh, Rainer Gerhard

(56) Entgegenhaltungen:
- EP-A2- 2 284 336
- WO-A1-2014/154738
- DE-A1-102007 013 480

## Beschreibung

Die Erfindung betrifft ein Sicherheitssystem gemäß dem Oberbegriff des Anspruchs 1.

Derartige Sicherheitssysteme werden generell für sicherheitstechnische Applikationen eingesetzt, insbesondere zur Absicherung von Gefahrenbereichen an Maschinen. Diese Gefahrenbereiche können insbesondere mit Umzäunungen versehen sein, in welchen als trennende Schutzeinrichtung eine Tür angeordnet ist. Durch das Sicherheitssystem wird die Tür in einer geschlossenen Positionen gesichert, um so einen unbefugten Zugang zum Gefahrenbereich zu verhindern.

Das Sicherheitssystem verhindert mit der Maschinenansteuerung der Maschine, dass gefährliche Maschinenfunktionen ausgeführt werden, solange die trennende Schutzeinrichtung, das heißt die Tür, geöffnet ist.

Eine derartiges Sicherheitssystem ist beispielsweise das System MGB der Firma Euchner GmbH + Co. KG. Dieses Sicherheitssystem umfasst eine Verriegelung, mittels der eine trennende Schutzeinrichtung wie eine Tür sicher verriegelt werden kann. Das MGB weist hierbei ein an der Tür angeordnetes Griffmodul und ein ortsfest an einem Rahmen oder dergleichen angeordnetes Verriegelungsmodul auf. Zur Verriegelung der Tür wird eine Riegelzunge am Griffmodul in eine Aufnahme im Verriegelungsmodul eingeschoben. Die Verriegelung der Tür kann dadurch erfasst werden, dass im Transponder als erstes Überwachungsmittel, der an der Riegelzunge angeordnet ist, von einer Leseeinheit ein Verriegelungsmodul erkannt wird, wenn die Riegelzunge in die Aufnahme eingeführt ist.

Zur Erhöhung der Funktionssicherheit des Sicherheitssystems weist dieses ein zweites Überwachungsmittel auf, das ebenfalls als Transponder ausgebildet ist und mit dem die Türstellung der Tür erkannt wird.

Generell werden mit dem zweiten Überwachsungsmittel weitere Signale erzeugt, wodurch das Gesamtsystem mit über den erforderlichen Bereich hinaus abgesichert wird. Insbesondere dient diese zusätzliche Absicherung zur Aufdeckung von Fehlerfällen des ersten Überwachungsmittels. Ist beispielsweise bei dem ersten Überwachungsmittel ein Defekt derart vorhanden, dass trotz nicht verriegelter Tür das erste Überwachungsmittel einen verriegelten Zustand signalisiert, obwohl dieser nicht vorhanden ist, so kann mit dem zweiten Überwachungsmittel die Türstellung der Tür erfasst werden und insbesondere detektiert werden, wenn diese geöffnet ist. In diesem Fall ist die Fehlfunktion des ersten Überwachungsmittels mit dem zweiten Überwachungsmittel aufgedeckt und das Sicherheitssystem kann einen sicheren Zustand herbeiführen, indem ein Nothalt für die Maschine ausgelöst wird.

Nachteilig bei diesem System ist, dass das erste und zweite Überwachungsmittel von einem Transponder gebildet sind, wobei die Transponder in so geringem Abstand zueinander angeordnet sind, dass sich diese gegenseitig beeinflussen können, was zu Fehlfunktionen des Sicherheitssystems führen kann.

Die EP 2 284 336 A2 betrifft eine Tür mit einem bewegbaren, eine Zugangsöffnung verschließenden Türblatt. Mittels eines Beschleunigungssensors ist die Beschleunigung des Türblatts erfassbar. Mit einem weiteren Detektor kann die geschlossene Stellung des Türblatts erfasst werden.

Die WO 2014/154738 A1 betrifft eine Einrichtung zur Überwachung einer Tür, die ein eine Türöffnung verschließendes Türblatt aufweist. Die Einrichtung umfasst eine Kontrolleinheit in der Sensorsignale eines Magnetometers und/oder Beschleunigungssensors ausgewertet werden. Dadurch kann erfasst werden, ob ein Türknopf oder Tür verriegelt ist und/oder welche Stellung das Türblatt hat.

Der Erfindung liegt die Aufgabe zugrunde, ein Sicherheitssystem bereitzustellen, welches eine hohe Funktionalität und eine hohe Funktionssicherheit aufweist.

Zur Lösung dieser Aufgabe sind die Merkmale des Anspruchs 1 vorgesehen. Vorteilhafte Ausführungsformen und zweckmäßige Weiterbildungen der Erfindung sind in den Unteransprüchen beschrieben.

Die Erfindung betrifft ein Sicherheitssystem für eine trennende Schutzeinrichtung mit einem ersten Überwachungsmittel zur Überwachung, ob die trennende Schutzeinrichtung in einer Schließposition mittels einer Verriegelung verriegelt ist und mit einem zweiten Überwachungsmittel zur Erfassung der Stellung der trennenden Schutzeinrichtung. Das zweite Überwachungsmittel weist einen vom ersten Überwachungsmittel verschiedenen, richtungsabhängige Signale generierenden Sensor auf, so dass mit den richtungsabhängigen Signale exakt der Bewegungsablauf der trennenden Schutzeinrichtung verfolgt werden kann. Zusätzlich,sind das erste und zweite Überwachungsmittel diversitär ausgebildet.

Ein wesentlicher Vorteil der Erfindung besteht darin, dass das erste und zweite Überwachungsmittel diversitär ausgebildet sind, so dass sich diese nicht gegenseitig beeinflussen können. Dies führt zu einer wesentlich erhöhten Funktionssicherheit des gesamten erfindungsgemäßen Sicherheitssystems.

Ein weiterer wesentlicher Vorteil der Erfindung besteht darin, dass mit dem Sensor als zweites Überwachungsmittel nicht nur ein digitales Signal generiert wird, das anzeigt, ob die trennende Schutzeinrichtung geschlossen oder offen ist. Vielmehr generiert der Sensor analoge richtungsabhängige Signale, mit denen exakt der Bewegungsablauf der trennenden Schutzeinrichtung verfolgt werden kann. Durch eine geeignete Auswertung dieser Sensorsignale kann die Funktionssicherheit des Sicherheitssystems signifikant erhöht werden.

Besonders vorteilhaft sind mit dem Sensor Bewegungsrichtungen in drei Raumrichtungen erfassbar.

Damit können auch komplexe Bewegungsabläufe der trennenden Schutzeinrichtung exakt erfasst werden.

Weiter vorteilhaft arbeitet der Sensor berührungslos.

Der Sensor arbeitet damit verschleißfrei und weist entsprechend eine hohe Robustheit auf.

Gemäß einer besonders vorteilhaften Ausgestaltung der Erfindung ist der Sensor ein 3-Achsen-Magnetometer, wie zum Beispiel ein 3D-Hallsensor.

Der 3-Achsen-Magnetometer erfasst typischerweise die Position eines Magneten. Dabei ist bevorzugt der 3-Achsen-Magnetometer an einem ortsfesten Element angeordnet. Der Magnet ist an der trennenden Schutzeinrichtung angeordnet.

Alternativ kann der 3-Achsen-Magnetometer an der trennenden Schutzeinrichtung und der Magnet ortsfest angeordnet sein.

Mit dem als 3-Achsen-Magnetometer ausgebildeten Sensor können Bewegungen in allen drei Raumrichtungen exakt erfasst werden.

Generell wird mit dem das zweite Überwachungsmittel bildenden Sensor nicht nur kontrolliert, ob sich die trennende Schutzeinrichtung im geschlossenen oder geöffneten Zustand befindet. Vielmehr wird mit dem Sensor die Bewegungsrichtung der trennenden Schutzeinrichtung erfasst und damit der komplette Bewegungsablauf der trennenden Schutzeinrichtung, wenn sich diese der Schließposition nähert, beziehungsweise von dieser entfernt. Durch Auswertung dieser Zusatzinformationen ist eine verbesserte Funktionskontrolle des Sicherheitssystems möglich.

Weiterhin können die Signale des Sensors dahingehend genutzt werden, den Typ der trennenden Schutzeinrichtung zu bestimmen. Ist beispielsweise die trennende Schutzeinrichtung in Form einer Tür, das heißt einer Schutztür ausgebildet, so kann anhand der Bestimmung des Bewegungsablaufs der Tür mittels der Sensorsignale bestimmt werden, ob es sich bei der Tür um eine Schiebetür oder Schwenktür handelt.

Weiter vorteilhaft werden die mit dem Sensor erfassten Bewegungen der Tür in einem Einlernvorgang eingelernt.

Dieser Einlernvorgang erfolgt während der Inbetriebnahme des Sicherheitssystems. Damit können Manipulationen während des darauffolgenden Betriebs des Sicherheitssystems dadurch aufgedeckt werden, dass der aktuell ermittelte Bewegungsablauf der trennenden Schutzeinrichtung von den eingelernten Werten abweicht.

Gemäß einer weiteren vorteilhaften Ausgestaltung erfolgt in Abhängigkeit von mit dem Sensor generierten Signalen eine Einstellung oder Montage der trennenden Schutzeinrichtung.

Damit wird die Funktionalität des erfindungsgemäßen Sicherheitssystems weiter erhöht.

Gemäß einer vorteilhaften Ausführungsform der Erfindung ist die trennende Schutzeinrichtung als Tür ausgebildet.

Der Transponder ist diversitär zu dem insbesondere als 3-Achsen-Magnetometer ausgebildeten Sensor, der das zweite Überwachungsmittel bildet, ausgebildet, so dass gegenseitige Beeinflussungen dieser Einheiten ausgeschlossen sind.

Gemäß einer zweckmäßigen Weiterbildung der Erfindung ist das Sicherheitssystem ein Sicherheitszuhaltesystem, wobei dieses eine mit einem dritten Überwachungsmittel überwachte Zuhaltung aufweist, wobei vorteilhaft das dritte Überwachungsmittel eine Lichtschranke ist.

Dadurch ist das Sicherheitsniveau des Sicherheitssystems weiter erhöht. Mit der Zuhaltung, die in Form eines Hubmagneten oder einer Klinke ausgebildet sein kann, wird die Verriegelung im verriegelten Zustand gesichert, wodurch ein unkontrollierter Zugang über die trennende Schutzeinrichtung zu dem Gefahrenbereich einer Maschine mit hoher Sicherheit vermieden wird.

Die Erfindung wird im Folgenden anhand der Zeichnungen erläutert. Es zeigen:
- Figur 1:: Schematische Darstellung eines Sicherheitssystems zur Sicherung des Zugangs zu einem Gefahrenbereich.
- Figur 2:: Einzeldarstellung des Sicherheitssystems zur Verriegelung einer Schiebetür.
- Figur 3:: Einzeldarstellung des Sicherheitssystems zur Verriegelung einer Schwenktür.

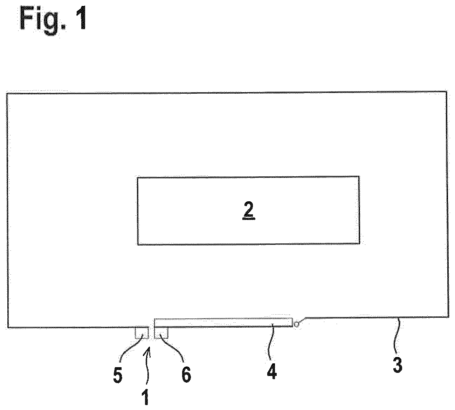

Figur 1 zeigt ein Ausführungsbeispiel des erfindungsgemäßen Sicherheitssystems 1 zur Gefahrenbereichsabsicherung. Bei diesem Ausführungsbeispiel wird ein Gefahrenbereich an einer Maschine 2, die gefahrbringende Maschinenfunktionen ausführen kann, abgesichert. Der Gefahrenbereich ist mit einer Umzäunung 3 umzäunt, wobei in dieser Umzäunung 3 eine Tür 4 als trennende Schutzeinrichtung vorgesehen ist, über welche Personen Zugang zum Gefahrenbereich erlangen können.

Das Sicherheitssystem 1 umfasst ein an einem Rahmen ortsfest angeordnetes Verriegelungsmodul 5 und ein an der Tür 4 angeordnetes Griffmodul 6. Mit dem so ausgebildeten Sicherheitssystem 1 kann die Tür 4, wenn sie in ihrer Schließposition ist, verriegelt werden, wodurch der Zugang zum Gefahrenbereich gesperrt ist.

Das Sicherheitssystem 1 wirkt mit der Maschinensteuerung so zusammen, dass der Betrieb der Maschine 2 zur Durchführung gefahrbringender Maschinenfunktionen nur dann frei gegeben wird, wenn mit dem Sicherheitssystem 1 die Tür 4 verriegelt und der Zugang zum Gefahrenbereich versperrt ist. Die Tür 4 kann erst dann geöffnet werden, wenn keine Gefahren mehr von der Maschine 2 ausgehen können und ein entsprechendes Signal von der Steuerung der Maschine 2 gesetzt wird.

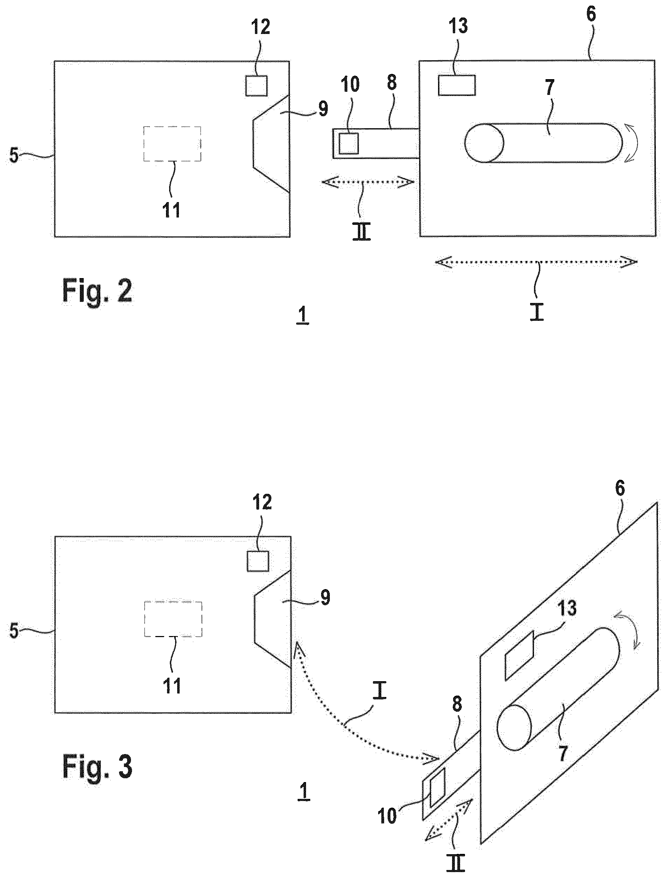

Figur 2 zeigt ein Ausführungsbeispiel des Sicherheitssystems 1, bei welchem das Griffmodul 6 an einer Schiebetür angeordnet ist. In diesem Fall wird die Tür 4 mit dem Griffmodul 6 linear auf das Verriegelungsmodul 5 zubewegt beziehungsweise von diesem wegbewegt. Diese lineare Aufwärtsbewegung ist in Figur 2 mit dem Pfeil I gekennzeichnet. Das Griffmodul 6 weist in bekannter Weise an seiner Außenseite einen Türgriff 7 auf. Mit dem Türgriff 7 kann eine Verriegelung betätigt werden.

Die Verriegelung umfasst eine Riegelzunge 8, die an der dem Verriegelungsmodul 5 zugewandten Stirnseite des Griffmoduls 6 angeordnet ist. Die Riegelzunge 8 ist in der mit dem Pfeil II gekennzeichneten Richtung mit einer linearen Stellbewegung ein- und ausfahrbar. Als zweite Komponente der Verriegelung ist am Verriegelungsmodul 5 eine Aufnahme 9 vorgesehen, die an der dem Griffmodul 6 zugewandten Stirnseite des Verriegelungsmoduls 5 angeordnet ist. Zur Verriegelung der Tür 4 wird, sobald sich diese in ihrer Schließposition befindet, die Riegelzunge 8 ausgefahren und in die Aufnahme 9 eingeführt, wodurch die Tür 4 verriegelt ist.

Zur Kontrolle der Verriegelung der Tür 4 ist als erstes Überwachungsmittel an dem freien Ende der Riegelzunge 8 ein Transponder 10 vorgesehen. Diesem Transponder 10 ist im Verriegelungsmodul 5 eine Leseeinheit 11 angeordnet. Befindet sich die Tür 4 im verriegelten Zustand, das heißt ist die Riegelzunge 8 in die Aufnahme 9 eingeführt, so wird mit der Leseeinheit 11 ein im Transponder 10 vorhandener Code erfasst, wodurch mit dem ersten Überwachungsmittel kontrolliert ist, dass sich die Tür 4 im verriegelten Zustand befindet.

Das Sicherheitssystem 1 kann zu einem Sicherheitszuhaltesystem weitergebildet sein, in dem zusätzlich zu der Verriegelung eine in den Zeichnungen nicht dargestellte Zuhaltung vorgesehen ist, die die Verriegelung in ihrem verriegelten Zustand sichert. Die Zuhaltung kann beispielsweise mit einer Lichtschranke überwacht beziehungsweise kontrolliert werden.

Erfindungsgemäß ist im Verriegelungsmodul 5 als zweites Überwachungsmittel ein 3-Achsen-Magnetometer 12 zur Erfassung der Türstellung der Tür 4 angeordnet. Mit dem 3-Achsen-Magnetometer 12 wird ein Magnet 13 detektiert der im Griffmodul 6 angeordnet ist. Anstelle eines 3-Achsen-Magnetometers 12 kann auch ein beliebiger anderer Sensor, mit dem berührungslos eine Richtungserkennung in drei Dimensionen durchführbar ist, eingesetzt werden.

Mit dem 3-Achsen-Magnetometer 12 wird nicht nur kontrolliert, ob sich die Tür 4 in ihrer Schließposition befindet oder nicht. Vielmehr wird mit dem 3-Achsen-Magnetometer 12 die Bewegungsrichtung der Magneten 13 und damit der Tür 4 erfasst, das heißt anhand der vom 3-Achsen-Magnetometer 12 generierten Signale kann das dreidimensionale Bewegungsprofil der Tür 4 erfasst werden.

Durch die Kombination der Signale des Transponders 10 als erstem Überwachungsmittel und des 3-Achsen-Magnetometers 12 als zweitem Überwachungsmittel kann die Funktionssicherheit des Sicherheitssystems 1 verbessert werden. Insbesondere können anhand der Signale des 3-Achsen-Magnetometers 12 Fehlfunktionen des Transponders 10, das heißt allgemein des ersten Überwachungsmittels, aufgedeckt werden. Weiterhin kann das zweite Überwachungsmittel zur Prüfung auf Plausibilität des ersten Überwachungsmittels herangezogen werden.

Da der 3-Achsen-Magnetometer 12 als erstes Überwachungsmittel diversitär zu dem Transponder 10 als zweitem Überwachungsmittel ausgebildet ist, sind gegenseitige Beeinflussungen dieser Überwachungsmittel ausgeschlossen. Zudem ist bei einer Weiterbildung des Sicherheitssystems 1 als Sicherheitszuhaltesystem auch eine gegenseitige Beeinflussung des 3-Achsen-Magnetometers 12 mit der Lichtschranke als drittem Überwachungsmittel zur Kontrolle der Zuhaltung ausgeschlossen, da auch diese Überwachungsmittel divesitär ausgebildet sind.

Figur 3 zeigt eine Anwendung des Sicherheitssystems 1 für eine Schwenktür. Der Aufbau des Sicherheitssystems 1 gemäß Figur 3 entspricht exakt dem Sicherheitssystem 1. Da mit dem 3-Achsen-Magnetometer 12 Bewegungen in allen drei Raumrichtungen erfasst werden können, kann mit dem 3-Achsen-Magnetometer 12 auch die Schwenkbewegung der Schwenktür (in Figur 3 mit dem Pfeil I gekennzeichnet) vollständig erfasst werden.

Die Signale des 3-Achsen-Magnetometers 12 können generell auch zu einer Typerkennung der Tür 4 verwendet werden. Insbesondere kann durch Ermittlung des Bewegungsprofils der Tür 4 mit dem 3-Achsen-Magnetometer 12 erkannt werden, ob die Tür 4 als Schiebetür (Figur 2) oder als Schwenktür (Figur 3) ausgebildet ist.

Vorteilhaft wird bei Inbetriebnahme des Sicherheitssystems 1 in einem Einlernvorgang das mit dem 3-Achsen-Magnetometer 12 erfasste Bewegungsprofil der Tür 4 eingelernt. Durch Vergleich der aktuellen Signale des 3-Achsen-Magnetometers 12 während des auf die Inbetriebnahme folgenden Arbeitsbetriebs mit den eingelernten Werten können Manipulationen an der Tür 4 aufgedeckt werden.

Schließlich können die Signale des 3-Achsen-Magnetometers 12 als Einstellhilfe oder Magnethilfe bei einer Einstellung beziehungsweise Montage der Tür 4 genutzt werden.

### Bezugszeichenliste

- (1): Sicherheitssystem
- (2): Maschine
- (3): Umzäunung
- (4): Tür
- (5): Verriegelungsmodul
- (6): Griffmodul
- (7): Türgriff
- (8): Riegelzunge
- (9): Aufnahme
- (10): Transponder
- (11): Leseeinheit
- (12): 3-Achsen-Magnetometer
- (13): Magnet

## Patentansprüche

1. Sicherheitssystem (1) für eine trennende Schutzeinrichtung mit einem ersten Überwachungsmittel zur Überwachung, ob die trennende Schutzeinrichtung in einer Schließposition mittels einer Verriegelung verriegelt ist und mit einem zweiten Überwachungsmittel zur Erfassung der Stellung der trennenden Schutzeinrichtung, **dadurch gekennzeichnet, dass** das zweite Überwachungsmittel einen vom ersten Überwachungsmittel verschiedenen, richtungsabhängige Signale generierenden Sensor aufweist, so dass mit den richtungsabhängigen Signale exakt der Bewegungsablauf der trennenden Schutzeinrichtung verfolgt werden kann und dass das erste und zweite Überwachungsmittel diversitär ausgebildet sind.

2. Sicherheitssystem nach Anspruch 1, **dadurch gekennzeichnet, dass** mit dem Sensor Bewegungsrichtungen in drei Raumrichtungen erfassbar sind.

3. Sicherheitssystem nach einem der Ansprüche 1 oder 2, **dadurch gekennzeichnet, dass** der Sensor berührungslos arbeitet.

4. Sicherheitssystem nach einem der Ansprüche 1 bis 3, **dadurch gekennzeichnet, dass** der Sensor ein 3-Achsen-Magnetometer (12) ist.

5. Sicherheitssystem nach Anspruch 4, **dadurch gekennzeichnet, dass** der 3-Achsen-Magnetometer (12) mit einem Magneten (13) zusammenwirkt.

6. Sicherheitssystem nach Anspruch 5, **dadurch gekennzeichnet, dass** der 3-Achsen-Magnetometer (12) an einem ortsfesten Element angeordnet ist, und dass der Magnet (13) an der trennenden Schutzeinrichtung angeordnet ist.

7. Sicherheitssystem nach einem der Ansprüche 1 bis 6, **dadurch gekennzeichnet, dass** mittels des Sensors die Bewegungsrichtung der trennenden Schutzeinrichtung erfasst wird.

8. Sicherheitssystem nach einem der Ansprüche 1 bis 7, **dadurch gekennzeichnet, dass** mittels des Sensors eine Typerkennung der trennenden Schutzeinrichtung erfolgt.

9. Sicherheitssystem nach einem der Ansprüche 1 bis 8, **dadurch gekennzeichnet, dass** die mit dem Sensor erfassten Bewegungen der Tür (4) in einem Einlernvorgang eingelernt werden.

10. Sicherheitssystem nach einem der Ansprüche 1 bis 9, **dadurch gekennzeichnet, dass** in Abhängigkeit von mit dem Sensor generierten Signalen eine Einstellung oder Montage der trennenden Schutzeinrichtung erfolgt.

11. Sicherheitssystem nach einem der Ansprüche 1 bis 10, **dadurch gekennzeichnet, dass** die trennende Schutzeinrichtung als Tür (4) ausgebildet ist.

12. Sicherheitssystem nach Anspruch 11, **dadurch gekennzeichnet, dass** die Tür (4) eine Schiebetür oder eine Schwenktür ist.

13. Sicherheitssystem nach einem der Ansprüche 1 bis 12, **dadurch gekennzeichnet, dass** das erste Überwachungsmittel zur Überwachung des Verriegelungszustands der Verriegelung ein Transponder (10) ist.

14. Sicherheitssystem nach einem der Ansprüche 1 bis 13, **dadurch gekennzeichnet, dass** dieses ein Sicherheitszuhaltesystem ist, wobei dieses eine mit einem dritten Überwachungsmittel überwachte Zuhaltung aufweist.

15. Sicherheitssystem nach Anspruch 14, **dadurch gekennzeichnet, dass** das dritte Überwachungsmittel eine Lichtschranke ist.

## Claims

1. Safety system (1) for a separating protective device with first monitoring means for monitoring whether the separating protective device is locked in a closed position by means of a lock and with second monitoring means for detecting the setting of the separating protective device, **characterised in that** that second monitoring means comprises a sensor generating directionally dependent signals differing from the first monitoring means so that the movement sequence of the separating protective device can be precisely tracked by the directionally dependent signals and that the first and second monitoring means are diversely constructed.

2. Safety system according to claim 1, **characterised in that** movement directions in three spatial directions are detectable by the sensor.

3. Safety system according to one of claims 1 and 2, **characterised in that** the sensor operates contactlessly.

4. Safety system according to any one of claims 1 to 3, **characterised in that** the sensor is a 3-axis magnetometer (12).

5. Safety system according to claim 4, **characterised in that** the 3-axis magnetometer (12) co-operates with a magnet (13).

6. Safety system according to claim 5, **characterised in that** the 3-axis magnetometer (12) is arranged at a stationary element and that the magnet (13) is arranged at the separating protective device.

7. Safety system according to any one of claims 1 to 6, **characterised in that** the movement direction of the separating protective device is detected by means of the sensor.

8. Safety system according to any one of claims 1 to 7, **characterised in that** a type recognition of the separating protective device is carried out by means of the sensor.

9. Safety system according to any one of claims 1 to 8, **characterised in that** the movements, which are detected by the sensor, of the door (4) are learnt in a learning process.

10. Safety system according to any one of claims 1 to 9, **characterised in that** a setting or mounting of the separating protective device takes place in dependence on signals generated by the sensor.

11. Safety system according to any one of claims 1 to 10, **characterised in that** the separating protective device is constructed as a door (4).

12. Safety system according to claim 11, **characterised in that** the door (4) is a sliding door or a swing door.

13. Safety system according to any one of claims 1 to 12, **characterised in that** the first monitoring means for monitoring the locking state of the lock is a transponder (10).

14. Safety system according to any one of claims 1 to 13, **characterised in that** this a safety retaining system, wherein this comprises retaining means monitored by a third monitoring means.

15. Safety system according to claim 14, **characterised in that** the third monitoring means is a light barrier.

## Revendications

1. Système de sécurité (1) destiné à un dispositif séparateur de protection, comprenant un premier moyen de surveillance conçu pour surveiller si le dispositif séparateur de protection est verrouillé en un emplacement de fermeture, à l'aide d'un verrou, et un deuxième moyen de surveillance conçu pour détecter la position dudit dispositif séparateur de protection, **caractérisé par le fait que** le deuxième moyen de surveillance est muni d'un capteur différant du premier moyen de surveillance et générateur de signaux tributaires de la direction, de façon telle que le déroulement des mouvements du dispositif séparateur de protection puisse être suivi, avec précision, à l'aide desdits signaux tributaires de la direction; et **par le fait que** lesdits premier et deuxième moyens de surveillance sont de réalisations dissemblables.

2. Système de sécurité selon la revendication 1, **caractérisé par le fait que** des directions de mouvement dans trois directions spatiales peuvent être détectées par le capteur.

3. Système de sécurité selon l'une des revendications 1 ou 2, **caractérisé par le fait que** le capteur fonctionne sans contact.

4. Système de sécurité selon l'une des revendications 1 à 3, **caractérisé par le fait que** le capteur est un magnétomètre triaxial (12).

5. Système de sécurité selon la revendication 4, **caractérisé par le fait que** le magnétomètre triaxial (12) coopère avec un aimant (13).

6. Système de sécurité selon la revendication 5, **caractérisé par le fait que** le magnétomètre triaxial (12) est implanté sur un élément fixe ; et **par le fait que** l'aimant (13) est implanté sur le dispositif séparateur de protection.

7. Système de sécurité selon l'une des revendications 1 à 6, **caractérisé par le fait que** la direction de mouvement du dispositif séparateur de protection est détectée au moyen du capteur.

8. Système de sécurité selon l'une des revendications 1 à 7, **caractérisé par le fait qu'**une identification du type de dispositif séparateur de protection est opérée au moyen du capteur.

9. Système de sécurité selon l'une des revendications 1 à 8, **caractérisé par le fait que** les mouvements de la porte (4), détectés par le capteur, sont acquis en un processus d'apprentissage.

10. Système de sécurité selon l'une des revendications 1 à 9, **caractérisé par le fait qu'**un réglage ou un montage du dispositif séparateur de protection a lieu en fonction de signaux engendrés par le capteur.

11. Système de sécurité selon l'une des revendications 1 à 10, **caractérisé par le fait que** le dispositif séparateur de protection est réalisé sous la forme d'une porte (4).

12. Système de sécurité selon la revendication 11, **caractérisé par le fait que** la porte (4) est une porte coulissante ou une porte pivotante.

13. Système de sécurité selon l'une des revendications 1 à 12, **caractérisé par le fait que** le premier moyen de surveillance, conçu pour surveiller l'état de verrouillage du verrou, est un transpondeur (10).

14. Système de sécurité selon l'une des revendications 1 à 13, **caractérisé par le fait que** ledit système est un système de sécurisation à la fermeture, ce dernier comportant un élément de maintien à l'état fermé, surveillé par un troisième moyen de surveillance.

15. Système de sécurité selon la revendication 14, **caractérisé par le fait que** le troisième moyen de surveillance est une barrière photoélectrique.
